# EUROPEAN PATENT APPLICATION

(11) **EP 4 261 484 A1**
(43) Date of publication of application: **18.10.2023**
(21) Application number: 23166853.4
(22) Date of filing: 05.04.2023
(51) Int. Cl.: F25D 29/00, B60H 1/32, B60P 3/20, B62D 33/04

(54) **A CONTAINER SYSTEM WITH A LOW-POWER WIRELESS DOOR SENSOR AND A TELEMATICS DEVICE**

(30) Priority: 11.04.2022 US 202263329694 P
(71) Applicant: Carrier Corporation, Palm Beach Gardens, FL 33418 (US)
(72) Inventor: WHITE, Clara, Syracuse, 13221 (US)
(74) Representative: Dehns

(57) **Abstract**

A container system (401) is provided and includes a body (402) having a first end (403), a second end (404) opposite the first end, and a door (405) disposed at the second end. The container system further includes a telematics device (410) disposed at the first end and a door sensor (420) disposed at the door and capable of low-power wireless communications with the telematics device.

## Description

The following description generally relates to container systems of trailers and, more specifically, to a low-power door sensor for a container system of a trailer.

Trailers are used to transport goods. Trailers typically have a rectangular shape and an empty interior that can be filled with various types of perishable and non-perishable goods. In some cases, those goods need to be maintained at a certain controlled temperature, and in these cases, trailers can include refrigeration units, which may be referred to as transport refrigeration units (TRUs). A TRU for a trailer can cool or condition the air inside of the trailer so that the goods being transported can be refrigerated.

According to a first aspect of the invention, a container system is provided. The container system includes a body having a first end, a second end opposite the first end, and a door disposed at the second end. The container system further includes a telematics device disposed at the first end and a door sensor disposed at the door and capable of low-power wireless communications with the telematics device.

Optionally, the body is elongate and the first and second ends are at opposed long ends of the container.

Optionally, the opposed long ends of the container are about forty (40) or more feet (10 m or more) apart and there is an absence of a gateway between the door sensor and the telematics device.

A transport refrigeration unit (TRU) may be configured to condition an interior of the container.

Optionally, the door sensor has a radio frequency (RF) identifier (ID) by which the door sensor is communicative with a mobile device and the mobile device has an application installed thereon, which, when executed on the mobile device, enables the door sensor to be paired with the telematics device, allows for a verification that the door sensor is communicating with the telematics device and allows the door sensor to report a battery status thereof.

The door sensor may be non-communicative with the telematics device until the door sensor is paired with the telematics device via the application.

The door sensor may be adhered to an interior surface of the door.

The door sensor may be configured to monitor openings and closings of the door.

The door sensor may be configured to communicate with the telematics device via cargo stored in an interior of the container.

The low-power wireless communications between the door sensor and the telematics device may be less than about 14 dB of power level and at a frequency of up to about 433 MHz or higher.

The low-power wireless communications between the door sensor and the telematics device may be at 3 dB of power level and at a frequency of 433 MHz.

A power level and a frequency of the low-power communications may be adjustable for compliance with local regulations.

According to another aspect of the invention, a container system is provided. The container system includes an elongate body having a first long end, a second long end opposite the first long end, and a door disposed at the second end. The container system further includes a telematics device disposed at the first long end and a door sensor disposed at the door and capable of low-power wireless communications at less than 143 dB of power level and at a frequency of up to 433 MHz or higher with the telematics device.

According to another aspect of the invention, a method of operating a container system is provided. The method includes disposing a telematics device at a first end of a container and a door sensor at a door, the door disposed at a second end of the container opposite the first end, pairing the door sensor with the telematics device using an application installed on a mobile device with which the door sensor is communicative, the door sensor being capable of low-power wireless communications with the telematics device following the pairing and verifying that the door sensor is communicating with the telematics device using the application.

The method described above may be implemented on one or more of the container systems described above.

The door sensor may have a radio frequency (RF) identifier (ID) by which the door sensor is communicative with the mobile device.

The verifying may include acknowledging messages received by the door sensor from the telematics device.

The method may further include ascertaining a battery status of the door sensor using the application.

The low-power wireless communications between the door sensor and the telematics device may be less than about 14 dB of power level and at a frequency of up to about 433 MHz or higher.

The low-power wireless communications between the door sensor and the telematics device may be at 3 dB of power level and at a frequency of 433 MHz.

The method may further include adjusting a power level and a frequency of the low-power communications for compliance with local regulations.

The subject matter, which is regarded as the invention, is particularly pointed out and distinctly claimed in the claims at the conclusion of the specification. The foregoing and other features and advantages of the invention are apparent from the following detailed description taken in conjunction with the accompanying drawings, in which:
FIG. 1 depicts a tractor trailer system having a transport refrigeration unit and a cargo compartment;
FIG. 2 depicts a transport refrigeration unit for a cargo compartment of the tractor trailer system of FIG. 1;
FIG. 3 is a schematic side view of a transport ship with containers on board;
FIG. 4 is a schematic diagram of a container system; and
FIG. 5 is a flow diagram illustrating a method of operating a container system.

These and other advantages and features will become more apparent from the following description taken in conjunction with the drawings.

It has been found that there is the need to have a door sensor in a container of a trailer to monitor when the door of the container is open. The sensor can serve to monitor potential energy loss as well as unauthorized door open or door close events. Because this door sensor has to communicate with a user or customer, the sensor is required to either talk to a refrigeration controller or to a telematics device within the container. An efficient way to implement the door sensor to telematics device communication is by way of wireless communications as a wire is costly, requires additional inputs/outputs (I/O), and presents additional service and reliability costs.

Thus, as will be described below, a low-power and wireless door sensor is provided, which will use a Lora module to communicate to the telematics device in a container of a trailer using low-power messages. The messages can be sent in a very specific way to be able to communicate in a low-power mode. This low-power communication makes it possible for the door sensor to meet the various countries' radio frequency (RF) requirements.

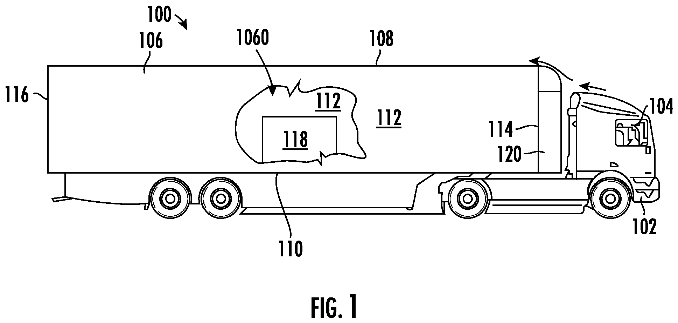

With reference to FIG. 1, a tractor trailer system 100 is provided. The tractor trailer system 100 includes a tractor 102 including an operator's compartment or cab 104 and an engine, which acts as the drive system of the tractor trailer system 100. A trailer 106 is coupled to the tractor 102. The trailer 106 is a refrigerated trailer 106 and includes a top wall 108, a directly opposed bottom wall 110, opposed side walls 112 and a front wall 114, with the front wall 114 being closest to the tractor 102. The trailer 106 further includes a door or doors (not shown) at a rear wall 116, opposite the front wall 114. The walls of the trailer 106 define a cargo compartment 1060. The trailer 106 is configured to maintain a cargo 118 located inside the cargo compartment at a selected temperature through the use of a transport refrigeration unit 120 located on the trailer 106. The transport refrigeration unit 120, as shown in FIG. 1, can be located at or attached to the front wall 114.

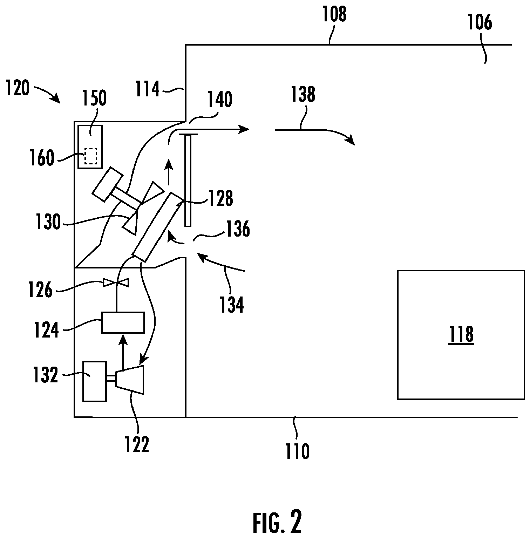

With reference to FIG. 2, the transport refrigeration unit 120 is shown in more detail. The transport refrigeration unit 120 includes a compressor 122, a condenser 124, an expansion valve 126, an evaporator 128 and an evaporator fan 130. The compressor 122 is operably connected to a power source 132, which drives the compressor 122. Airflow is circulated into and through the cargo compartment of the trailer 106 by means of the transport refrigeration unit 120. A return airflow 134 flows into the transport refrigeration unit 120 from the cargo compartment of the trailer 106 through a refrigeration unit inlet 136 and across the evaporator 128 via the evaporator fan 130, thus cooling the return airflow 134. The cooled return airflow 134, now referred to as supply airflow 138, is supplied into the cargo compartment of the trailer 106 through a refrigeration unit outlet 140, which in some embodiments is located near the top wall 108 of the trailer 106. The supply airflow 138 cools the cargo 118 in the cargo compartment of the trailer 106. Also included in the cargo compartment can be a refrigerant leak sensor 150 for detecting a leak of a particular type of refrigerant or substance. It is to be understood that the refrigerant leak sensor 150 can be located in different locations in the system and is not limited by the example shown in FIG. 2. For example, the refrigerant leak sensor 150 can be located in the evaporator section of the transport refrigeration unit 120, a different portion of the cargo compartment of the trailer 106 or another location in the system. Upon detection by the refrigerant leak sensor 150, a signal can be transmitted to controller 160. The controller 160 controls various aspects of the transport refrigeration unit 120 and the transport refrigeration unit power system. The controller 160 can control the compressor 122, the condenser 124, the expansion valve 126, the evaporator 128 and the evaporator fan 130 in addition to other equipment or sensors. The controller 160 can be connected to the equipment over a wired or wireless connection (connections not shown). In some cases, the controller 160 can be configured to perform a low charge diagnostics calculation which is used to perform various calculations of the refrigeration system of the transport refrigeration unit 120 to determine a state of operation. In other embodiments, the low charge diagnostics calculation can be performed in a cloud network (not shown in FIG. 2).

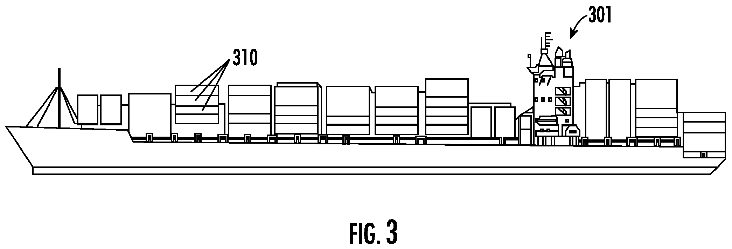

With reference to FIG. 3, a naval transport ship 301 is provided to transport multiple containers 310 over waterways, such as oceans, seas, lakes and rivers. As shown in FIG. 3, the multiple containers 310 can be stacked in multiple stacks on the deck of the naval transport ship 301. Each of the multiple containers 310 can include a dedicated transport refrigeration unit, which is similar to the transport refrigeration unit 120 of FIG. 2 and can have a dedicated power source or power provided to it from the naval transport ship 301.

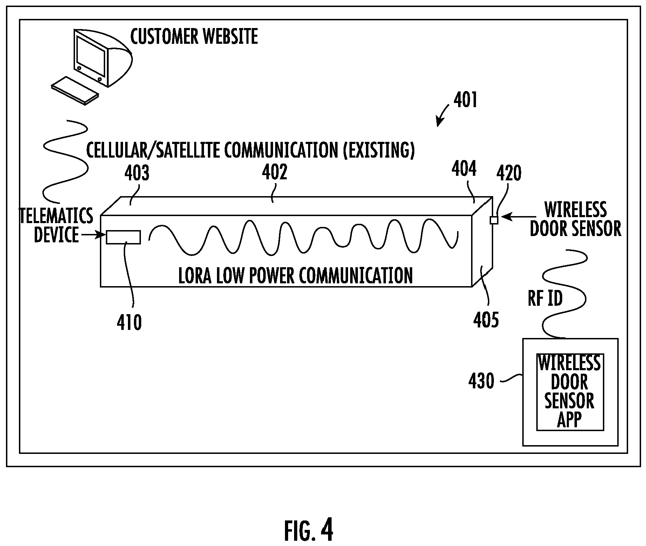

With continued reference to FIGS. 1 and 2 and FIG. 3 and with additional reference to FIG. 4, a container system 401 of a transport refrigeration unit (TRU) system is provided and may be configured as the trailer 106 of FIG. 1 and/or any of the multiple containers 310 of FIG. 3.

The container system 401 is elongate and includes an elongate body 402 having a first long end 403 (i.e., the front wall 114 of FIG. 1), a second long end 404 (i.e., the rear wall 116 of FIG. 1), which is opposite the first long end 403 and a door 405 at the second end 404. In accordance with embodiments, the first long end 403 and the second long end 404 can be about forty (40) feet (10 m) apart or more. A TRU, such as the transport refrigeration unit 120 of FIGS. 1 and 2 can be disposed to condition an interior of the container system 401 (i.e., the cargo compartment 1060 of FIG. 1).

The container system 401 further includes a telematics device 410, which is disposed at the first long end 403 and which is disposed in signal communication with a customer website via wireless communications (e.g., cellular, satellite, etc.), and a wireless door sensor (hereinafter referred to as a "door sensor") 420. The door sensor 420 is disposed at the door 405 and is configured to monitor openings or closings of the door. The door sensor 420 is also capable of low-power wireless communications with the telematics device 410 via cargo stored in the interior of the container system 401. In some cases, the door sensor 420 can be adhered to an interior surface of the door 405 by tape or another type of adhesive with epoxy or silicone surrounding the door sensor 420 for protection. The low-power wireless communications may reduce the need for a gateway device, and in certain instances there is an absence of a gateway device between the door sensor 420 and the telematics device 410 in the container system 401.

In accordance with embodiments, the low-power wireless communications between the door sensor 420 and the telematics device 410 can be less than about 14 dB of power level and at a frequency of up to 433 MHz or higher or, more specifically, at 3 dB of power level and at a frequency of 433 MHz. In some cases, a power level and a frequency of the low-power communications between the door sensor 420 and the telematics device 410 can be adjustable (i.e., increased or decreased) for compliance with local regulations.

As shown in FIG. 4, the door sensor 420 has a radio frequency (RF) identifier (ID) by which the door sensor 420 is communicative with a mobile device 430, such as a smartphone or a portable computing unit. The mobile device 430 has an application installed thereon, which, when executed on the mobile device 430, enables the door sensor 420 to be paired with the telematics device 410, allows for a verification that the door sensor 420 is communicating with the telematics device 410 by way of acknowledgments of messages received by the door sensor 420 from the telematics device 410 and allows the door sensor 420 to report a battery status thereof. In accordance with embodiments, the door sensor 420 can be non-communicative with the telematics device 410 until the door sensor 420 is paired with the telematics device 410 via the application.

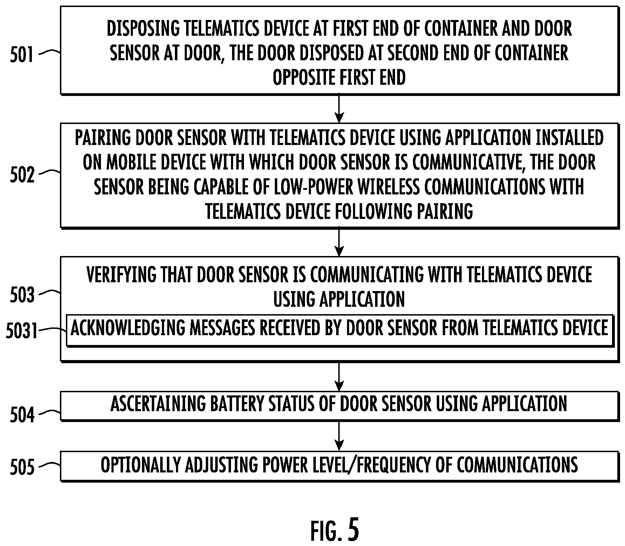

With reference to FIG. 5, a method of operating a container system of a TRU system, such as the container system 401 of FIG. 4, is provided. The method includes disposing a telematics device at a first end of a container and a door sensor at a door located at a second end of the container opposite the first end (i.e., the telematics device 410 and the door sensor 420 of FIG. 4) (block 501). The method further includes pairing the door sensor with the telematics device using an application installed on a mobile device with which the door sensor is communicative, the door sensor being capable of low-power wireless communications with the telematics device following the pairing (block 502). The method further includes verifying that the door sensor is communicating with the telematics device using the application (block 503). In accordance with embodiments, the verifying of block 403 can include acknowledging messages received by the door sensor from the telematics device (block 5031). The method can further include ascertaining a battery status of the door sensor using the application (block 504).

In accordance with further embodiments, the low-power wireless communications between the door sensor and the telematics device are less than about 14 dB of power level and at a frequency of up to about 433 MHz or higher or, more specifically, at 3 dB of power level and at a frequency of 433 MHz. In some cases, the method can also include optionally adjusting a power level and a frequency of the low-power communications for compliance with local regulations (block 505) if doing so would improve communications or enable local regulations to be met.

Technical effects and benefits of the present invention are the provision of a low-power door sensor for a container of a trailer that can sense when the container has been opened and that can operate at low power levels and certain frequencies allowing for compliance with various jurisdictions.

While the present invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention as set out in the claims. Additionally, while various embodiments of the invention have been described, it is to be understood that the exemplary embodiment(s) may include only some of the described exemplary aspects. Accordingly, the invention is not to be seen as limited by the foregoing description, but is only limited by the scope of the appended claims.

The following clauses set out features of the invention which may or may not presently be claimed in this application but which may form basis for future amendment or a divisional application.
1. A container system, comprising:
   a body having a first end, a second end opposite the first end, and a door disposed at the second end;
   a telematics device disposed at the first end; and
   a door sensor disposed at the door and capable of low-power wireless communications with the telematics device.
2. The container system according to clause 1, wherein the body is elongate and the first and second ends are at opposed long ends of the container.
3. The container system according to clause 1, wherein the opposed long ends of the container are about forty (40) or more feet apart, and there is an absence of a gateway between the door sensor and the telematics device.
4. The container system according to clause 1, further comprising a transport refrigeration unit (TRU) configured to condition an interior of the container.
5. The container system according to clause 1, wherein:
   the door sensor has a radio frequency (RF) identifier (ID) by which the door sensor is communicative with a mobile device, and
   the mobile device has an application installed thereon, which, when executed on the mobile device, enables the door sensor to be paired with the telematics device, allows for a verification that the door sensor is communicating with the telematics device, and allows the door sensor to report a battery status thereof.
6. The container system according to clause 5, wherein the door sensor is non-communicative with the telematics device until the door sensor is paired with the telematics device via the application.
7. The container system according to clause 1, wherein the door sensor is adhered to an interior surface of the door.
8. The container system according to clause 1, wherein the door sensor is configured to monitor openings and closings of the door.
9. The container system according to clause 1, wherein the door sensor is configured to communicate with the telematics device via cargo stored in an interior of the container.
10. The container system according to clause 1, wherein the low-power wireless communications between the door sensor and the telematics device are less than about 14 dB of power level and at a frequency of up to about 433 MHz or higher.
11. The container system according to clause 1, wherein the low-power wireless communications between the door sensor and the telematics device are at 3 dB of power level and at a frequency of 433 MHz.
12. The container system according to clause 11, wherein a power level and a frequency of the low-power communications are adjustable for compliance with local regulations.
13. A container system, comprising:
   an elongate body having a first long end, a second long end opposite the first long end, and a door disposed at the second end;
   a telematics device disposed at the first long end; and
   a door sensor disposed at the door and capable of low-power wireless communications at less than 14 dB of power level and at a frequency of up to 433 MHz or higher with the telematics device.
14. A method of operating a container system, the method comprising:
   disposing a telematics device at a first end of a container and a door sensor at a door, the door disposed at a second end of the container opposite the first end;
   pairing the door sensor with the telematics device using an application installed on a mobile device with which the door sensor is communicative, the door sensor being capable of low-power wireless communications with the telematics device following the pairing; and
   verifying that the door sensor is communicating with the telematics device using the application.
15. The method according to clause 14, wherein the door sensor has a radio frequency (RF) identifier (ID) by which the door sensor is communicative with the mobile device.
16. The method according to clause 14, wherein the verifying comprises acknowledging messages received by the door sensor from the telematics device.
17. The method according to clause 14, further comprising ascertaining a battery status of the door sensor using the application.
18. The method according to clause 14, wherein the low-power wireless communications between the door sensor and the telematics device are less than about 14 dB of power level and at a frequency of up to about 433 MHz or higher.
19. The method according to clause 14, wherein the low-power wireless communications between the door sensor and the telematics device are at 3 dB of power level and at a frequency of 433 MHz.
20. The method according to clause 19, further comprising adjusting a power level and a frequency of the low-power communications for compliance with local regulations.

## Claims

1. A container system (401), comprising:
a body (402) having a first end (403), a second end (404) opposite the first end, and a door (405) disposed at the second end;
a telematics device (410) disposed at the first end; and
a door sensor (420) disposed at the door (405) and capable of low-power wireless communications with the telematics device (410).

2. The container system (401) according to claim 1, wherein the body (402) is elongate and the first and second ends (403, 404) are at opposed long ends of the container.

3. The container system (401) according to claim 2, wherein the opposed long ends of the container are about forty or more feet (10 m) apart, and there is an absence of a gateway between the door sensor (420) and the telematics device (410).

4. The container system (401) according to claim 1, 2 or 3, further comprising a transport refrigeration unit (TRU) (120) configured to condition an interior of the container.

5. The container system (410) according to any preceding claim, wherein:
the door sensor (420) has a radio frequency identifier by which the door sensor (420) is communicative with a mobile device (430), and the mobile device (430) has an application installed thereon, which, when executed on the mobile device (430), enables the door sensor (420) to be paired with the telematics device (410), allows for a verification that the door sensor (420) is communicating with the telematics device (410), and allows the door sensor (420) to report a battery status thereof;
optionally wherein the door sensor (420) is non-communicative with the telematics device (410) until the door sensor (420) is paired with the telematics device (410) via the application.

6. The container system (401) according to any preceding claim, wherein the door sensor (420) is adhered to an interior surface of the door (405).

7. The container system (401) according to any preceding claim, wherein the door sensor (420) is configured to monitor openings and closings of the door (405); and/or
wherein the door sensor (420) is configured to communicate with the telematics device (410) via cargo stored in an interior of the container.

8. The container system (401) according to any preceding claim, wherein the low-power wireless communications between the door sensor (420) and the telematics device (410) are less than about 14 dB of power level and at a frequency of up to about 433 MHz or higher;
optionally wherein the low-power wireless communications between the door sensor (420) and the telematics device (410) are at 3 dB of power level and at a frequency of 433 MHz.

9. The container system according to any preceding claim, wherein a power level and a frequency of the low-power communications are adjustable for compliance with local regulations.

10. The container system (401) according to claim 1, wherein:
the body (402) is an elongate body and the first end is a first long end (403), the second end is a second long end (404) opposite the first long end (403), and the door (405) is disposed at the second long end (404); and
the telematics device (410) is disposed at the first long end (403);
wherein the low-power wireless communications are at less than 14 dB of power level and at a frequency of up to 433 MHz or higher.

11. A method of operating a container system (401), the method comprising:
disposing (501) a telematics device (410) at a first end of a container and a door sensor (420) at a door (405), the door (405) disposed at a second end of the container opposite the first end;
pairing (502) the door sensor (420) with the telematics device (410) using an application installed on a mobile device (430) with which the door sensor (420) is communicative, the door sensor (420) being capable of low-power wireless communications with the telematics device (410) following the pairing; and
verifying (503) that the door sensor (420) is communicating with the telematics device (410) using the application.

12. The method according to claim 11, wherein the door sensor (420) has a radio frequency identifier by which the door sensor (420) is communicative with the mobile device (430).

13. The method according to claim 11 or 12, wherein the verifying (503) comprises acknowledging (5031) messages received by the door sensor (420) from the telematics device; and/or
wherein the method further comprises ascertaining (504) a battery status of the door sensor (420) using the application.

14. The method according to claim 11, 12 or 13, wherein the low-power wireless communications between the door sensor (420) and the telematics device (410) are less than about 14 dB of power level and at a frequency of up to about 433 MHz or higher;
optionally wherein the low-power wireless communications between the door sensor (420) and the telematics device (410) are at 3 dB of power level and at a frequency of 433 MHz.

15. The method according to any of claims 11 to 14, further comprising adjusting (505) a power level and a frequency of the low-power communications for compliance with local regulations.
